# EUROPÄISCHE PATENTANMELDUNG

(11) **EP 1 772 320 A1**
(43) Veröffentlichungstag der Anmeldung: **11.04.2007**
(21) Anmeldenummer: 05021889.0
(22) Anmeldetag: 07.10.2005
(51) Int. Cl.: B60R 16/04

(54) **Stromverteilerschiene**

(71) Anmelder: Delphi Technologies, Inc., Troy, MI 48007 (US)
(72) Erfinder: Staab, Christian, 42899 Remscheid (DE); Bock, Joachim, 42119 Wuppertal (DE); Ochse, Frank, 42389 Wuppertal (DE)
(74) Vertreter: Manitz, Finsterwald & Partner GbR

(57) **Zusammenfassung**

Eine Stromverteilerschiene umfasst eine elektrisch leitfähige Rohrleitung, die zumindest abschnittsweise durch Pressen in eine abgeflachte Form gebracht worden ist, und deren Endabschnitte (25,26') für den Anschluss elektrischer Leitungen (52) hülsenförmig ausgebildet sind.

## Beschreibung

Die Erfindung betrifft eine Stromverteilerschiene zur Verwendung in Kraftfahrzeugen. Derartige Stromverteilerschienen sind grundsätzlich bekannt und dienen unter anderem der Aufnahme von Hauptsicherungen, die einen Kabelsatz in einem Kraftfahrzeug absichern.

Nachteilig bei den bekannten Stromverteilerschienen ist jedoch, dass diese als gestanzte Blech-Biege-Elemente gefertigt werden, da ihre Herstellung sehr aufwändig ist und schon bei geringfügigen Änderungen der Größe und/oder Form der gestanzten Stromverteilerschienen die entsprechenden Stanzwerkzeuge umgebaut bzw. ausgetauscht werden müssen. Darüber hinaus entsteht durch das Stanzen unerwünschter Materialabfall.

Nachteilig ist weiterhin, dass für den Anschluss von elektrischen Leitungen an der Stromverteilerschiene bei Verwendung offener Crimpkrallen viel Platz im vorhandenen Baumraum des Kraftfahrzeugs benötigt wird. Dies erschwert auch die Montage der Stromverteilerschiene in dem Kraftfahrzeug.

Der Erfindung liegt die Aufgabe zugrunde, eine Stromverteilerschiene zu schaffen, die kostengünstig ist und eine einfache Montage ermöglicht. Gleichzeitig soll eine zuverlässige und sichere Funktionsweise gewährleistet sein.

Die Lösung dieser Aufgabe erfolgt durch die Merkmale des Anspruchs 1.

Bei der erfindungsgemäßen Stromverteilerschiene ist vorgesehen, dass sie eine elektrisch leitfähige Rohrleitung umfasst, die zumindest abschnittsweise durch Pressen in eine abgeflachte Form gebracht worden ist. Die Endabschnitte der Stromverteilerschiene sind hülsenförmig für den Anschluss elektrischer Leitungen ausgebildet.

Die erfindungsgemäße Stromverteilerschiene zeichnet sich vor allem dadurch aus, dass das Ausgangsmaterial eine gängige elektrisch leitfähige Rohrleitung sein kann. Durch das Pressen der Rohrleitung erhält die Stromverteilerschiene einen im Wesentlichen rechteckigen Querschnitt mit hoher mechanischer Stabilität. Ein weiterer Vorteil der erfindungsgemäßen Stromverteilerschiene besteht darin, dass auf die individuellen Bedürfnisse der Kunden hinsichtlich der Geometrie der Stromverteilerschiene, insbesondere hinsichtlich der Form und/oder Größe, schnell und kostengünstig reagiert werden kann, da keine Stanzwerkzeuge umgebaut bzw. ausgetauscht werden müssen. Darüber hinaus fällt im Gegensatz zu der Herstellung einer gestanzten Stromverteilerschiene bei der Herstellung der erfindungsgemäßen Stromverteilerschiene kein Materialabfall an, was zu einer weiteren Reduktion der Herstellungskosten beiträgt.

Die erfindungsgemäße Stromverteilerschiene zeichnet sich weiterhin dadurch aus, dass durch die hülsenförmige Ausbildung der Endabschnitte ein geschlossenes Crimpkrallendesign vorliegt, das beim Crimpen weniger Platz im Bauraum des Kraftfahrzeugs benötigt als das üblicherweise verwendete offene Krallendesign. Die Endabschnitte können je nach Anforderung beispielsweise sechskant- oder F-gecrimpt werden. Darüber hinaus wird durch den Materialzusatz im Kontaktbereich aufgrund der hülsenförmigen Ausbildung der Endabschnitte eine erhöhte Sicherheit in der Kontaktierung mit den elektrischen Anschlussleitungen erreicht.

Vorteilhafte Ausführungsformen der Erfindung sind in den Unteransprüchen, der Beschreibung und den Zeichnungen angegeben.

Gemäß einer vorteilhaften Ausführungsform der Erfindung ist die Stromverteilerschiene aus einer einzigen elektrisch leitfähigen Rohrleitung gefertigt, wobei diese durch Pressen in einem mittleren Abschnitt in eine abgeflachte Form gebracht worden ist, ohne dass dabei die beiderseits des mittleren Abschnitts gelegenen Endabschnitte wesentlich verformt wurden. Die unverformten Endabschnitte sind hülsenförmig ausgebildet und stellen eine Rohranbindung zum Anschluss elektrischer Leitungen im geschlossenen Crimpkrallendesign dar. Ein wesentlicher Vorteil der aus einem Stück gefertigten Stromverteilerschiene ist die einfache und schnelle Herstellung in wenigen Produktionsschritten.

Gemäß einer weiteren vorteilhaften Ausführungsform sind die Endabschnitte der Stromverteilerschiene als elektrisch leitfähige Rohrstücke ausgebildet, die durch Verpressen mit der Rohrleitung verbunden sind. Dabei sind die Rohrleitung und die Rohrstücke ineinander eingeschoben und miteinander in eine abgeflachte Form verpresst. Ein Vorteil dieser Ausführungsform ist die Möglichkeit Rohre und Rohrstücke verschiedenen Durchmessers miteinander zu verbinden, um unterschiedlichen Anforderungen der Kunden bezüglich des Anschlusses elektrischer Leitungen Rechnung zu tragen. Darüber hinaus kann in dem gemeinsamen Verlauf der Rohrleitung und der mit der Rohrleitung verbundenen Rohrstücke zumindest eine Ausbuchtung vorgesehen sein. Diese Ausbuchtung kann durch nicht vollständiges Verpressen der Rohrleitung und der Rohrstücke miteinander entstanden sein. Ein Vorteil einer derartigen Ausbuchtung besteht darin, dass die Rohrstück dadurch gegen Verschieben relativ zur Längsachse der Rohrleitung gesichert sind und ein Lösen der Verbindung verhindert wird.

Sowohl bei einstückigen als auch bei mehrstückigen Ausführungsformen der erfindungsgemäßen Stromverteilerschiene kann vorgesehen sein, dass sie in ihrem abgeflachten Abschnitt mindestens einen Kontaktbereich aufweisen, der entlang seiner Längsseite nebeneinander elektrische Kontakte unterschiedlicher Art, wie beispielsweise Sicherungen oder elektrische Leitungen, aufnehmen kann. Diese Kontakte können beispielsweise an Bohrungen oder eingepressten Gewindestiften an der Stromverteilerschiene befestigt werden. Kontakte können aber auch direkt an den Kontaktbereich der Stromverteilerschiene geclincht werden.

Es versteht sich, dass die Form der Stromverteilerschiene den geometrischen Anforderungen des Bauraumes eines Kraftfahrzeugs durch Kombinationen von Abkantungen und Biegungen angepasst werden kann. Dies gilt sowohl für den abgeflachten Abschnitt als auch für die hülsenförmigen Endabschnitte der Stromverteilerschiene. Die Stromverteilerschiene kann in einem Kunststoffgehäuse gehalten sein oder anderweitig im Kraftfahrzeug befestigt sein.

Die Erfindung wird im Folgenden rein beispielhaft anhand vorteilhafter Ausführungsformen und unter Bezugnahme auf die Zeichnungen beschrieben. Es zeigen:
- Fig. 1: eine perspektivische Ansicht einer Ausführungsform einer Stromverteilerschiene, und

- Fig. 2: eine perspektivische Ansicht einer weiteren Ausführungsform einer Stromverteilerschiene.

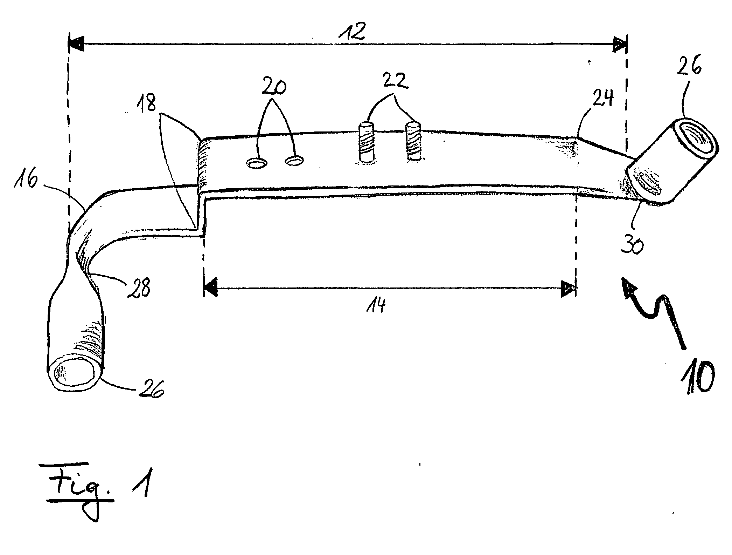

Fig. 1 zeigt eine aus einem einzigen Rohr gefertigte erfindungsgemäße Stromverteilerschiene 10 zur Verwendung in Kraftfahrzeugen, die in ihrem mittleren Bereich einen abgeflachten Abschnitt 12 mit einem im Wesentlichen rechteckigen Querschnitt aufweist. Der abgeflachte Abschnitt 12 ist durch partielles Verpressen der Rohrleitung ausgebildet und an seinem linken Ende durch eine Biegung 16 um etwa 90° in der durch den abgeflachten Abschnitt 12 definierten Ebene nach vorne abgewinkelt. In seinem Verlauf weist der abgeflachte Abschnitt 12 eine Stufe senkrecht zu der vorgenannten Ebene auf, die durch zwei rechtwinklige Abkantungen 18 hervorgerufen wird. An diese Stufe schließt sich im weiteren Verlauf des abgeflachten Abschnitts 12 ein Kontaktbereich 14 an, der entlang seiner Längsseite nebeneinander eine Vielzahl von elektrischen Kontakten aufnehmen kann. In dem Kontaktbereich 14 sind beim dargestellten Ausführungsbeispiel für den Anschluss elektrischer Kontakte zwei Bohrungen 20 ausgebildet. Darüber hinaus sind in den Kontaktbereich 14 zwei Gewindestifte 22 eingepresst, die ebenfalls der Befestigung von elektrischen Kontakten dienen. Am rechten Ende des Kontaktbereichs 14 schließt sich eine weitere Abkantung 24 an, wobei der Winkel zwischen der Längsachse der Stromverteilerschiene und dem rechts an die flache Abkantung 28 anschließenden Teil des abgeflachten Abschnitts 12 weniger als 30° beträgt.

Die erfindungsgemäße Stromverteilerschiene 10 umfasst weiterhin an ihren äußeren Enden hülsenförmig ausgebildete Endabschnitte 26, die für den Anschluss elektrischer Leitungen vorgesehen sind. In die hülsenförmigen Endabschnitte können elektrische Leitungen (nicht gezeigt) eingeführt und beispielsweise durch sechskant- oder F-Crimpen an diesen befestigt werden. Am linken Ende der Stromverteilerschiene 10 ist ein gerader Endabschnittsübergang 28, d.h. ohne Abwinklung zwischen dem hülsenförmigen Endabschnitt 26 und dem abgeflachten Abschnitt 12, realisiert. Das rechte Ende der Stromverteilerschiene 10 weist eine Abkantung 30 des Endabschnitts 26 auf, die einen Winkel von etwa 120° zwischen dem rechten Ende des abgeflachten Bereichs 12 und dem hülsenförmigen Endabschnitt 26 einschließt.

Zur Herstellung der vorstehend beschriebenen Stromverteilerschiene 10 wird ein Teilstück eines geraden und elektrisch leitfähigen Rohres in seinem mittleren Bereich mit Hilfe eines Stempels gepresst bis das Rohr bzw. die Rohrleitung den abgeflachten Abschnitt 12 mit einem im Wesentlichen rechteckigen Querschnitt aufweist. Die beiderseits des abgeflachten Abschnitts 12 gelegenen Endabschnitte 26 werden dabei nicht wesentlich verformt. Anschließend wird das Bauteil an dem linken Ende des abgeflachten Abschnitts 12 um 90° nach vorne gebogen, wodurch die Biegung 16 entsteht. Danach wird der abgeflachte Abschnitt 12 im linken Bereich mit den beiden rechtwinkligen Abkantungen 18 und im rechten Bereich mit der flachen Abkantung 24 von weniger als 30° versehen. In einem weiteren Schritt wird der rechte Endabschnitt 26 um etwa 120° abgekantet. Der durch die Abkantungen 18 und 24 begrenzte Kontaktbereich 14 kann anschließend mit den beiden Bohrungen 20 versehen werden. Abschließend werden in den Kontaktbereich 14 die beiden Gewindestifte 22 eingepresst.

An dieser Stelle sei darauf hingewiesen, dass die Kontaktierungselemente wie Bohrungen, Gewindestifte oder Clinchkontakte in dieser Anmeldung rein beispielhaft genannt sind.

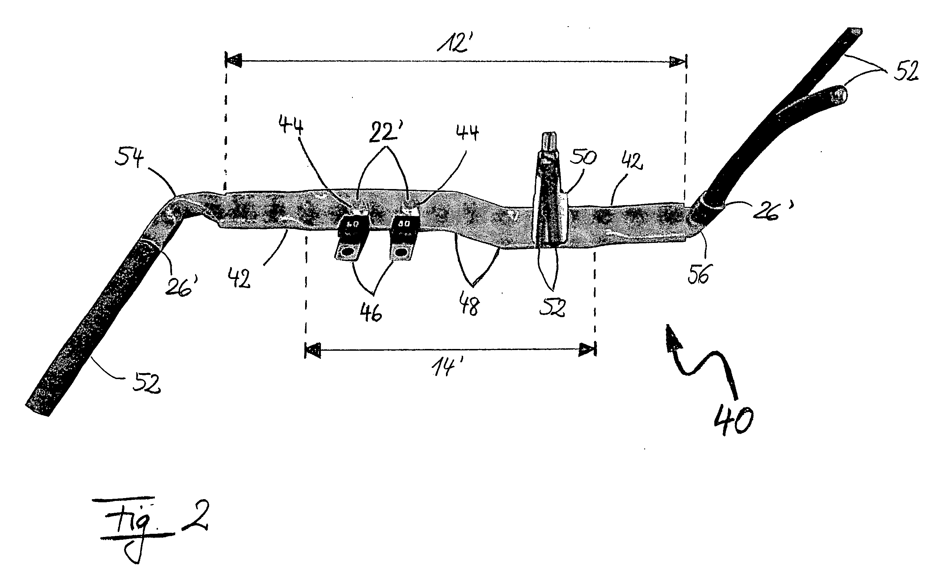

Fig. 2 zeigt eine erfindungsgemäße Stromverteilerschiene 40, die eine elektrisch leitfähige Rohrleitung umfasst, die zumindest abschnittsweise durch Pressen in eine abgeflachte Form gebracht ist, und deren Endabschnitte 26' als elektrisch leitfähige Rohrstücke ausgebildet sind. Die Rohrstücke sind in die Rohrleitung teilweise eingeführt und mit dieser in eine abgeflachte Form verpresst. Der abgeflachte Abschnitt 12' der Stromverteilerschiene 40 weist zu den äußeren Enden hin im gemeinsamen Verlauf der Rohrleitung und der mit der Rohrleitung verbundenen Rohrstücke Ausbuchtungen 42 auf. Diese Ausbuchtungen 42 sind durch nicht vollständiges Verpressen der Rohrstücke mit der Rohrleitung entstanden und dienen zur Stabilisierung. Sie verhindern auch das Verschieben der Rohrstücke relativ zur Rohrleitung und somit ein ungewolltes Lösen der gepressten Verbindungen. Die Ausbuchtungen 42 begrenzen einen Kontaktbereich 14'. Der Kontaktbereich 14' ist beim dargestellten Ausführungsbeispiel mit zwei eingepressten Gewindestiften 22' versehen, an denen mit Muttern 44 Sicherungen 46 befestigt sind. Im mittleren Bereich des Kontaktbereichs 14' weist der Verlauf der Stromverteilerschiene 40 eine durch zwei Abkantungen 48 definierte Schräge auf, die mit der Längsachse der Stromverteilerschiene 40 einen Winkel von etwa 30° einschließt. Beiderseits dieser Schräge verlaufen die Teilabschnitte des Kontaktbereichs 14' parallel. Zwischen der durch die Abkantungen 48 definierten Schräge und dem rechten Rand des Kontaktbereichs 14' ist durch Clinchen ein Kontaktteil 50 befestigt. Der von der Stromverteilerschiene abgewandte Teil des Kontaktteils 50 ist als offene Crimpkralle ausgebildet und fixiert zwei elektrische Leitungen 52.

Die erfindungsgemäße Stromverteilerschiene umfasst weiterhin vorgenannten Endabschnitte 26', die als Rohrstücke ausgebildet sind und durch Verpressen mit der Rohrleitung verbunden sind. Das Rohrstück, welches das linke Ende der Stromverteilerschiene bildet, weist eine Biegung 54 auf, wodurch sich zwischen dem Endabschnitt 26' und der Längsachse der Stromverteilerschiene ein Winkel von etwa 80° ergibt. An dem Endabschnitt 26' ist eine elektrische Leitung 52 durch Crimpen befestigt. Das das rechte Ende der Stromverteilerschiene 40 bildende Rohrstück weist eine Abkantung 56 auf, die einen Winkel von etwa 120° zwischen dem hülsenförmigen Endabschnitt 26' und der Längsachse der Stromverteilerschiene 40 bildet. An diesem Endabschnitt 26' sind zwei elektrische Leitungen 52 befestigt.

Zur Herstellung der Stromverteilerschiene 40 werden in einem ersten Schritt gerade und elektrisch leitfähige Rohrstücke teilweise in die Enden einer geraden und elektrisch leitfähigen Rohrleitung eingeschoben. Die Rohrstücke bilden die hülsenförmigen Endabschnitte 26'. Dann werden die Rohrleitung und die Rohrstücke in ihrem gemeinsamen Verlauf miteinander verpresst, wobei dieses Verpressen in dem der Mitte der Rohrleitung zugewandten Teil des gemeinsamen Verlaufs unvollständig ist. Anschließend wird der durch die unvollständig verpressten Bereiche begrenzte mittlere Verlauf der Rohrleitung in eine abgeflachte Form mit einem im Wesentlichen rechteckigen Querschnitt gepresst. Dieser Teil der Stromverteilerschiene 40 stellt den Kontaktbereich 14' dar. Die beiderseits des Kontaktbereichs 14' liegenden unvollständig verpressten Bereiche bilden nun die Ausbuchtungen 42. Im Anschluss daran wird die Stromverteilerschiene 40 in ihrem mittleren Verlauf mit den beiden Abkantungen 48 versehen. In einem weiteren Schritt wird der rechte Endabschnitt 26' um etwa 80° nach vorne gebogen, wodurch die Rohrstückbiegung 54 entsteht. Im Anschluss daran wird der rechte Endabschnitt 26' um etwa 120° abgekantet. Dann wird der Kontaktbereich 14' mit zwei Gewindestiften 22' versehen. An diesen werden mit Muttern 44 Sicherungen 46 befestigt. Daraufhin wird im Kontaktbereich 14' zwischen der rechten Abkantung 48 und der rechten Ausbuchtung 42 das Kontaktteil 50 durch Clinchen befestigt. Abschließend werden elektrische Leitungen 52 an den Endabschnitten 26' und dem Kontaktteil 50 durch Crimpen fixiert.

### Bezugszeichenliste

- 10: Stromverteilerschiene
- 12, 12': abgeflachter Abschnitt
- 14, 14': Kontaktbereich
- 16: Biegung
- 18: Abkantung
- 20: Bohrung
- 22, 22': Gewindestift
- 24: flache Abkantung
- 26, 26': hülsenförmiger Endabschnitt
- 28: gerader Endabschnittsübergang
- 30: abgekanteter Endabschnitt
- 40: Stromverteilerschiene
- 42: Ausbuchtung
- 44: Mutter
- 46: Sicherung
- 48: Abkantung
- 50: geclinchtes Kontaktteil
- 52: elektrische Leitung
- 54: Rohrstückbiegung
- 56: Rohrstückabkantung

## Patentansprüche

1. Stromverteilerschiene zur Verwendung in Kraftfahrzeugen, die eine elektrisch leitfähige Rohrleitung umfasst, die zumindest abschnittsweise durch Pressen in eine abgeflachte Form gebracht worden ist, und deren Endabschnitte (26, 26') hülsenförmig für den Anschluss elektrischer Leitungen (52) ausgebildet sind.

2. Stromverteilerschiene nach Anspruch 1,
**dadurch gekennzeichnet,**
**dass** sie in ihrem abgeflachten Abschnitt (12, 12') einen im Wesentlichen rechteckigen Querschnitt aufweist.

3. Stromverteilerschiene nach Anspruch 1 oder 2,
**dadurch gekennzeichnet,**
**dass** sie aus einem einzigen elektrisch leitfähigen Rohr gefertigt ist.

4. Stromverteilerschiene nach Anspruch 1 oder 2,
**dadurch gekennzeichnet,**
**dass** mindestens ein Endabschnitt (26, 26') als elektrisch leitfähiges Rohrstück ausgebildet ist, das durch Verpressen mit der Rohrleitung verbunden ist.

5. Stromverteilerschiene nach Anspruch 4,
**dadurch gekennzeichnet,**
**dass** die Rohrleitung und die Rohrstücke ineinander eingeschoben sind und miteinander in eine abgeflachte Form verpresst sind.

6. Stromverteilerschiene nach Anspruch 4 oder 5,
**dadurch gekennzeichnet,**
**dass** im gemeinsamen Verlauf der Rohrleitung und der mit der Rohrleitung verbundenen Rohrstücke zumindest eine Ausbuchtung (42) vorgesehen ist.

7. Stromverteilerschiene nach einem der vorhergehenden Ansprüche,
**dadurch gekennzeichnet,**
**dass** mindestens einer der Endabschnitte (26, 26') abgewinkelt oder abgekantet ist.

8. Stromverteilerschiene nach einem der vorhergehenden Ansprüche,
**dadurch gekennzeichnet,**
**dass** diese in ihrem abgeflachten Abschnitt (12, 12') eine oder mehrere Abwinklungen (16) oder Abkantungen (18, 24, 48) aufweist.

9. Verfahren zur Herstellung einer Stromverteilerschiene nach Anspruch 3, umfassend die folgenden Schritte:
Pressen einer elektrisch leitfähigen Rohrleitung in einem mittleren Abschnitt bis dieser eine abgeflachte Form aufweist, ohne dass dabei die beiderseits des mittleren Abschnitts gelegenen Endabschnitte (26, 26') wesentlich verformt werden.

10. Verfahren zur Herstellung einer Stromverteilerschiene nach Anspruch 4, umfassend die folgenden Schritte:
teilweises Einführen von elektrisch leitfähigen, hülsenförmigen Rohrstücken und einer elektrisch leitfähigen Rohrleitung ineinander,
Pressen der Rohrleitung in einem mittleren Abschnitt bis dieser eine abgeflachte Form aufweist, und
Verbinden der Rohrstücke mit der Rohrleitung durch Verpressen.

11. Verwendung einer elektrisch leitfähigen Rohrleitung, die zumindest abschnittsweise durch Pressen in eine abgeflachte Form gebracht worden ist, und deren Endabschnitte (26, 26') hülsenförmig für den Anschluss elektrischer Leitungen (52) ausgebildet sind, als Stromverteilerschiene in einem Kraftfahrzeug.
